# EUROPEAN PATENT SPECIFICATION

(11) **EP 2 607 335 B1**
(45) Date of publication and mention of the grant of the patent: **23.11.2016**
(21) Application number: 10856025.1
(22) Date of filing: 17.08.2010
(51) Int. Cl.: C04B 35/83, F16D 69/02, C08J 5/14, B28B 3/00, B28B 1/52, C04B 33/36, C04B 35/053, C04B 35/18, C04B 35/48, C04B 35/486, C04B 35/634, C04B 35/80

(54) **COPPER-FREE CERAMIC FRICTION MATERIAL AND PREPARATION METHOD THEREOF**
KUPFERFREIES KERAMISCHES REIBUNGSMATERIAL UND HERSTELLUNGSVERFAHREN DAFÜR
MATÉRIAU DE FRICTION CÉRAMIQUE DÉPOURVU DE CUIVRE ET SON PROCÉDÉ DE PRÉPARATION

(43) Date of publication of application: 26.06.2013
(73) Proprietor: Nanjing Taiwei Technology Co., Ltd., Nanjing, Jiangsu 210061 (CN); Nanjing University of Technology, Gulou Nanjing, Jiangsu 210009 (CN)
(72) Inventor: LU, Xiaohua, Nanjing Jiangsu 210009 (CN); SHI, Yijun, Nanjing Jiangsu 210009 (CN); CHEN, Jian, Nanjing Jiangsu 210009 (CN); WANG, Changsong, Nanjing Jiangsu 210009 (CN); MU, Liwen, Nanjing Jiangsu 210009 (CN)
(74) Representative: Kramer Barske Schmidtchen Patentanwälte PartG mbB
(86) International application number: PCT/CN2010/076062
(87) International publication number: WO 2012/022027

(56) References cited:
- WO-A2-2007/106880
- CN-A- 1 576 637
- CN-A- 1 754 050
- JP-A- H0 853 553
- JP-A- 10 045 413
- JP-A- 2000 178 536
- US-A1- 2003 013 782
- US-A1- 2010 084 233

## Description

### Technical Field of the Invention

The invention belongs to the field of friction materials, and particularly relates to a copper-free and asbestos-free environment-friendly brake pad material.

### Background of the Invention

Nowadays, many vehicles are developed to have high speed and high load, which is much more rigorous for braking materials, for example, a disc brake reaches transient temperature of 400 DEG C to 600 DEG C when braking and even of above 800 DEG C when braking on some long ramps, so it is an urgent issue to develop a high performance and environment-friendly friction material. Anti-lock brake systems (ABS) are commonly used in luxury cars. When working, the ABSs snub at a quite high frequency; to rapidly dissipate the accumulated heat at the moment of stopping braking, the friction material is required to have high coefficient of heat conductivity, and meanwhile the material must have excellent friction and wear performance, thus the service life of the braking material may be prolonged.

As common friction additives, copper materials such as copper fiber, red copper fiber and copper particle are characterized by soft texture and high coefficient of heat conductivity, they are beneficial for rapidly dissipating heat produced by friction and also beneficial for forming friction transfer film surfaces. But investigations by environmentalists show that most copper pollution in the environment comes from braking dust, and high concentration of copper in the environment will result in pernicious effect on organisms, especially to organisms in water environment. Therefore, the content of copper in the braking material will be strictly restricted gradually, and places such as Washington State in America begin to gradually restrict the content of copper in a brake. American patents also begin to involve in researching this aspect, for example copper-free and non-free brake pads were disclosed in American Patents No. US2010084232 (A1) and US2010084233 (A1). In these patents, under the condition of not containing copper and copper alloy, friction materials with excellent performance were prepared using phenolic resin, organic fiber, metal sulfide and the like.

As high modulus and high strength fiber, carbon fiber has the advantages of light weight, high temperature resistance, no creepage at high temperature, good anti-fatigue performance, small coefficient of thermal expansion, good anti-corrosion performance, and high property of heat conductivity. During the ABS braking, carbon fiber is more conducive to heat dissipation, so that hot spots will not be caused on a brake disc surface to affect the friction performance. Among the friction materials, carbon fiber is mostly applied to a C/C composite. For example, in Patent No. EP1357310-A, carbon fiber was used for strengthening a C/SiC material, a braking material with high coefficient of heat conductivity was prepared by adding copper, so that the braking material has good friction performance at high temperature; and in Patent No. EP1028098-A, a friction material applicable to high speed and high load prepared by a carbon fiber strengthened carbon/carbon composite was disclosed. With reference to the concept of the C/C composite, by using the high heat conductivity of carbon fiber, carbon fiber is used in a phenolic resin-based friction material in the invention, to prepare a material which still has excellent friction performance even at high speed and high load.

During friction, carbon fiber improves the heat conductivity performance of the material to some extent. But as a braking friction material, high requirement for braking power is proposed to carbon fiber, so other materials need to be added to increase the friction wear performance of the material.

Asbestos is a common material used in braking pads in early stage. Due to poor heat resistance and being a carcinogenic substance, asbestos has been forbidden to be used in braking pads in many countries. In future, a braking material will use a substance, the ratio of length to diameter of which is less than 3, or a substance which has a lamellar or block structure. Titanate is a novel ceramic. As a substitute of asbestos, titanate has been widely used in braking pads in recent years. A friction material (ZL00800133.2) was invented by Otsuka Pharmaceutical Co., Ltd. This friction material is made from alkali metal titanate which is titanate with lamellar planes. Added with 3-50% of alkali metal titanate, the friction material may accomplish excellent friction and wear performance. The applications of titanate in braking pads are also mentioned in some other patents, for example, in Patent No. CN101631747, potassium titanate with novel shape and excellent wear-resistance of friction materials and strengthening performance of resin compositions was provided; and in Patent No. KR2009019982-A, a friction material containing 7-9% of copper fiber and 6-8% of potassium titanate fiber was provided.

US 2003/0013782 A1 relates to a molded friction element such as a brake pad, or clutch disk having improved heat-dissipation and heat-conduction properties comprising a friction composition containing a plurality of microbeads of barium titanate having a diameter up to about 70 µ and a content up to about 40 % by weight.

### Summary of the Invention

The purpose of the invention is to provide an environment-friendly braking pad friction material, to solve the problems of heat resistance reduction and poor friction stability of friction materials, and this friction material still has stable and excellent friction performance even at 250 DEG C to 600 DEG C.

The purpose of the invention may be fulfilled through the following measures:
A copper-free ceramic friction material is provided, this friction material at least contains the following materials in mass content: 2-30% of alkaline earth-based metal compound and 2-30% of carbon fiber, wherein the alkaline earth-based metal compound is MₓFe_{y}TiO_{z}, M is alkaline earth element Be, Mg, Ca, Sr or Ba, x is 0.2-2, y is 1-2, and z is 4-16. In addition to the two components mentioned above, the copper-free ceramic friction material also contains common components of the conventional copper-free ceramic friction materials.

A preferable copper-free ceramic friction material is provided. In addition to the alkaline earth-based metal compound and the carbon fiber, the copper-free ceramic friction material also contains a binder, a friction performance modifier and a filler, wherein the mass content of the binder is 5-20%; the total mass content of the friction performance modifier and the filler is 20-80%, and sum of the components is 100%.

In the copper-free ceramic friction material provided in the invention, the mass content of the alkaline earth-based metal compound is preferably 5%-25%, and more preferably 10%-20%. In order to accomplish a better or more special performance, the content of the alkaline earth-based metal compound may be controlled between 10% and 15%. The mass content of the carbon fiber is preferably 2%-25%, more preferably 2%-20%, and most preferably 5%-10%.

In the alkaline earth-based metal compound MₓFe_{y}TiO_{z}, M is preferably alkaline earth element Mg, Ca or Ba, x is preferably 0.2-1 and most preferably 0.2-0.5, y is preferably 1-2, and z is preferably 4-8. The microstructure of the alkaline earth-based metal compound is preferably a particle, the ratio of equivalent length to equivalent width of which is 1-3, the thickness thereof is 0.5-20 microns and the width thereof is 0.5-20 microns, and the specific structure is in lamellar or block shape. The preparation method of the alkaline earth-based metal compound is as follows: carnallite and titanium-contained minerals are used as main materials (or alkali metal compound is also contained), and then the main materials are sintered at 800 DEG C to 1200 DEG C to obtain the alkaline earth-based metal compound. For the detailed method, please refer to CN101254944A.

The carbon fiber can be all kinds of carbon fibers which are conventionally used, and specifically, the carbon fiber is preferably selected from one or more of polyacrylonitrile-based carbon fiber, asphalt-based carbon fiber, viscose rayon-based carbon fiber or phenolic fiber-based carbon fiber.

The binder is selected from one or more of phenolic resin, modified phenolic resin or nitrile rubber.

The friction performance modifier and the filler are selected from one or more of glass fiber, ceramic fiber, compound mineral fiber, silicate fiber, lignin fiber, cellulosic fiber, aramid fiber, iron black, zircon, iron red, zirconia, magnesium oxide, mica powder, fluorite powder, zeolite, vermiculite, anatase, attapulgite clay, kaoline, lithopone, barium sulfate, friction powder or heavy calcium carbonate. The friction performance modifier in the invention refers to other friction performance modifying fibers rather than carbon fiber.

The preparation method of the copper-free ceramic friction material comprises the following steps:
(1) premixing: measuring alkaline earth-based metal compound and carbon fiber, and mixing them uniformly;
(2) mixing: measuring binder, friction performance modifier and filler, mixing them with the mixture in step (1) and stirring, and then adding to a hot-pressing mold;
(3) hot-pressing: rising the temperature to 155 DEG C to 200 DEG C, and keeping the temperature and pressure for 3-10 minutes under a pressure of 10-30MPa for hot-pressing;
(4) post-processing: keeping the hot-pressed material at 185 DEG C to 200 DEG C for 3-8 hours, and cooling to obtain the copper-free ceramic friction material.

The alkaline earth-based metal compound has excellent anti-fading performance and high friction coefficient, and the wear can be effectively reduced. Because the raw materials and products of alkaline earth metal have weaker alkalinity when compared with alkali metal, when used as the braking pad, alkaline earth metal is more conducive to protection of non alkali-resistant raw materials such as resin. In addition, experiments show that the mechanical property of composites can be obviously improved by with the addition of such material, and such material also can absorb a part of braking noises during braking, undoubtedly, this material is an ideal friction material. Such material is of a non-fiber structure, it is a non-toxic and harmless material with no respirable fiber, so that it is harmless to the working environment. And moreover, the alkaline earth metal compound in the invention is an alkaline earth-based metal compound containing ferrum, the property of heat conductivity of which is 2-10 times of that of common titanate. During braking, static electricity on the surface of the friction material due to friction can be effectively led out, accomplishing an anti-static effect.

As high modulus and high strength fiber, carbon fiber has the advantages of light weight, high temperature resistance, no creepage at high temperature, good anti-fatigue performance, small coefficient of thermal expansion, good anti-corrosion performance, and high property of heat conductivity. During braking, carbon fiber is more conducive to heat dissipation.

In a copper-free ceramic braking pad system, when the alkaline earth-based metal compound is used separately, the friction coefficient is high, but the friction coefficient is not stable at high temperature and the mechanical property is poor; and when the carbon fiber is used separately, the friction performance can be well kept at high temperature and the mechanical property also can be well kept, but the friction coefficient is low.

The coefficient of heat conductivity of the copper-free ceramic friction material provided in the invention is 0.8-3 W·K⁻¹m⁻¹; in fixed speed experiments at above 250 DEG C, when compared with a braking pad which does not contain the carbon fiber and the alkaline earth-based metal compound, the friction coefficient of the friction material is improved by 1%-10%, the wear rate is decreased by 10%-30%, and the temperature on the friction surface is reduced by 2%-15%.

Under the condition of not using copper, the carbon fiber and the alkaline earth-based metal compound are used collaboratively in the invention, so that this friction material has not only the excellent friction wear performance of the alkaline earth-based metal compound but also the advantages of good mechanical frame property and good heat conductivity property of the carbon fiber. The collaboration of the two materials enables the friction material to have relatively stable friction coefficient at high temperature to bring people with comfort feeling of braking, and the friction material has the characteristics of small wear rate and good mechanical property. Therefore, it is an environment-friendly material. By the collaborative use of the two materials, the friction performance of the friction material is better than that of the friction material separately using alkaline metal titanate, and the raw material cost of the braking pad is also reduced. In addition, because the two materials have high property of heat conductivity, the prepared friction material has high coefficient of heat conductivity; and during friction braking, heat produced by friction is dissipated in time, the temperature on the friction surface is effectively reduced, and the friction wear performance is remarkably increased, so that when the load of a whole vehicle is consistent to a required braking distance, the highest speed of the vehicle is properly increased. When the speed of the whole vehicle is consistent to the required braking distance, the vehicle could bear larger load. And meanwhile, by the collaborative use of the carbon fiber and the alkaline earth-based metal compound, the friction performance of the friction material is better than that of the friction material separately using the alkaline metal titanate, and the raw material cost of the braking pad is reduced also.

The friction material has the following advantages:
1. The friction material has excellent property of heat conductivity, so that heat produced during braking can be uniformly distributed on the surface of the braking pad, without hot spots. The friction material can still have stable friction performance at high temperature, and the heat-fading resistance of the friction material is improved.
2. The friction material provided in the invention easily produces a transfer film during friction, the friction coefficient is stabilized and the wear amount is reduced. The alkalescence of the alkaline earth-based metal compound is conducive to protection of the resin-based materials, and the static electricity is prevented to some extent due to the property of heat conductivity of the alkaline earth-based metal compound.
3. The friction material in the invention contains both the alkaline earth-based metal compound and the carbon fiber, the friction performance is enhanced by the collaborative use of the two materials, so that the friction performance at high temperature is better and the friction coefficient is more stable. The two materials are compensated in size, and the adding of the alkaline earth-based metal compound effectively enhances the poor fiber areas, so that both the heat resistance and the wear resistance of the braking pad are improved.
4. Under the condition of copper free, the two materials can still have excellent friction performance, so the two materials effectively compensate the function of copper in a ceramic braking pad containing copper.
5. The friction material in the invention contains the alkaline earth-based metal compound and the carbon fiber, the two materials have high electric conductivity, so during braking, the two materials effectively reduce static electricity and contribute to an anti-static effect.
6. The friction material in the invention has better braking effect if combined with the ABS systems. This is directly reflected from that, compared with a braking pad not added with the carbon fiber and the alkaline earth-based metal compound, the coefficient of heat conductivity is improved by 1-3 times, so that the temperature on the friction surface is effectively reduced and the heat-fading resistance is remarkably improved. And meanwhile, when the load of the whole vehicle is consistent to the required braking distance, the highest speed of the vehicle is properly increased; and when the speed of the whole vehicle is consistent to the required braking distance, the vehicle could bear larger load.

### Detailed Description of the Invention

The technical solution of the invention will be further described in details below by the following embodiments and contrast examples. In order to test the effects of the friction material, according to the national standard GB5763-1998 in China, the braking pads prepared by the embodiments and the contrast examples and the ceramic braking pads with copper fiber produced by a Japanese company are tested by a fixed speed friction tester. The embodiments and the contrast examples are prepared with the following substances.

### Embodiment 1

According to weight percentage, 2% of alkaline earth-based metal compound, 2% of carbon fiber, 13% of phenolic resin, 4% of nitrile rubber, 3% of aramid fiber, 8% of glass fiber, 4% of ceramic fiber, 3% of zircon, 4% of magnesium oxide, 24% of barium sulfate, 7% of calcium carbonate, 15% of mica powder, 5% of vermiculite and 6% of friction powder are added to a high speed dispenser, uniformly stirred, taken out to be put into a grinding apparatus for pressing and forming, and then put into a press vulcanizer and kept for 10 minutes at 160 DEG C and under a pressure of 15MPa; and then the braking pad is taken out to be sintered for 4 hours at 185 DEG C. Mg_{0.3}Fe_{1.5}TiO₄ is selected as the alkaline earth-based metal compound, of which the ratio of equivalent length to equivalent width is 2.5-3, and the thickness is 0.5-5 microns. The carbon fiber is polyacrylonitrile-based carbon fiber.

### Embodiment 2

According to weight percentage, 30% of alkaline earth-based metal compound, 2% of carbon fiber, 9% of phenolic resin, 3% of nitrile rubber, 3% of aramid fiber, 7% of glass fiber, 3% of ceramic fiber, 3% of zircon, 3% of magnesium oxide, 19% of barium sulfate, 3% of calcium carbonate, 5% of mica powder, 5% of vermiculite and 5% of friction powder are added to a high speed dispenser, uniformly stirred, taken out to be put into a grinding apparatus for pressing and forming, and then put into a press vulcanizer and kept for 10 minutes at 160 DEG C and under a pressure of 15MPa; and then the braking pad is taken out to be sintered for 4 hours at 185 DEG C. Mg_{0.3}Fe_{1.5}TiO₄ is selected as the alkaline earth-based metal compound, of which the ratio of equivalent length to equivalent width is 2.5-3, and the thickness is 0.5-5 microns. The carbon fiber is polyacrylonitrile-based carbon fiber.

### Embodiment 3

According to weight percentage, 2% of alkaline earth-based metal compound, 30% of carbon fiber, 9% of phenolic resin, 3% of nitrile rubber, 1% of aramid fiber, 1% of glass fiber, 4% of ceramic fiber, 5% of zircon, 4% of magnesium oxide, 24% of barium sulfate, 6% of calcium carbonate, 3% of vermiculite and 5% of fluorite powder are added to a high speed dispenser, uniformly stirred, taken out to be put into a grinding apparatus for pressing and forming, and then put into a press vulcanizer and kept for 10 minutes at 160 DEG C and under a pressure of 15MPa; and then the braking pad is taken out to be sintered for 4 hours at 185 DEG C. Mg_{0.3}Fe_{1.5}TiO₄ is selected as the alkaline earth-based metal compound, of which the ratio of equivalent length to equivalent width is 2.5-3, and the thickness is 0.5-5 microns. The carbon fiber is polyacrylonitrile-based carbon fiber.

### Embodiment 4

According to weight percentage, 13% of alkaline earth-based metal compound, 8% of carbon fiber, 9% of phenolic resin, 3% of nitrile rubber, 4% of aramid fiber, 8% of glass fiber, 4% of ceramic fiber, 3% of zircon, 4% of magnesium oxide, 19% of barium sulfate, 7% of calcium carbonate, 9% of mica powder, 4% of vermiculite, 2% of friction powder and 3% of fluorite powder are added to a high speed dispenser, uniformly stirred, taken out to be put into a grinding apparatus for pressing and forming, and then put into a press vulcanizer and kept for 10 minutes at 160 DEG C and under a pressure of 15MPa; and then the braking pad is taken out to be sintered for 4 hours at 185 DEG C. Mg_{0.4}Fe_{1.6}TiO₆ is selected as the alkaline earth-based metal compound, of which the ratio of equivalent length to equivalent width is 2.5-3, and the thickness is 0.5-5 microns. The carbon fiber is polyacrylonitrile-based carbon fiber.

### Embodiment 5

According to weight percentage, 13% of alkaline earth-based metal compound, 8% of carbon fiber, 9% of phenolic resin, 3% of nitrile rubber, 4% of aramid fiber, 8% of glass fiber, 4% of ceramic fiber, 3% of zircon, 4% of magnesium oxide, 19% of barium sulfate, 7% of calcium carbonate, 9% of mica powder, 4% of vermiculite, 2% of friction powder and 3% of fluorite powder are added to a high speed dispenser, uniformly stirred, taken out to be put into a grinding apparatus for pressing and forming, and then put into a press vulcanizer and kept for 10 minutes at 160 DEG C and under a pressure of 15MPa; and then the braking pad is taken out to be sintered for 4 hours at 185 DEG C. Ba_{0.3}Fe_{1.5}TiO₄ is selected as the alkaline earth-based metal compound, of which the ratio of equivalent length to equivalent width is 2.5-3, and the thickness is 0.5-5 microns. The carbon fiber is polyacrylonitrile-based carbon fiber.

### Embodiment 6

According to weight percentage, 13% of alkaline earth-based metal compound, 8% of carbon fiber, 9% of phenolic resin, 3% of nitrile rubber, 4% of aramid fiber, 8% of glass fiber, 4% of ceramic fiber, 3% of zircon, 4% of magnesium oxide, 19% of barium sulfate, 7% of calcium carbonate, 9% of mica powder, 4% of vermiculite, 2% of friction powder and 3% of fluorite powder are added to a high speed dispenser, uniformly stirred, taken out to be put into a grinding apparatus for pressing and forming, and then put into a press vulcanizer and kept for 10 minutes at 160 DEG C and under a pressure of 15MPa; and then the braking pad is taken out to be sintered for 4 hours at 185 DEG C. Ba_{0.3}Fe_{1.5}TiO₄ is selected as the alkaline earth-based metal compound, of which the ratio of equivalent length to equivalent width is 2.5-3, and the thickness is 0.5-5 microns. The carbon fiber is polyacrylonitrile-based carbon fiber.

### Contrast example 1

13% of alkali-based metal compound, 8% of carbon fiber, 9% of phenolic resin, 3% of nitrile rubber, 4% of aramid fiber, 8% of glass fiber, 4% of ceramic fiber, 3% of zircon, 4% of magnesium oxide, 19% of barium sulfate, 7% of calcium carbonate, 9% of mica powder, 4% of vermiculite, 2% of friction powder and 3% fluorite powder are added to a high speed dispenser, uniformly stirred, taken out to be put into a grinding apparatus for pressing and forming, and then put into a press vulcanizer and kept for 10 minutes at 160 DEG C and under a pressure of 15MPa; and then the braking pad is taken out to be sintered for 4 hours at 185 DEG C. Na_{0.6}Mg_{0.75}TiO₄ whisker is selected as the alkali-based metal compound titanate, of which the length is 50-60 microns and the width is 0.3 microns. The carbon fiber is the polyacrylonitrile-based carbon fiber.

### Contrast example 2

21% of alkali-based metal compound, 9% of phenolic resin, 3% of nitrile rubber, 4% of aramid fiber, 8% of glass fiber, 4% of ceramic fiber, 3% of zircon, 4% of magnesium oxide, 19% of barium sulfate, 7% of calcium carbonate, 9% of mica powder, 4% of vermiculite, 2% of friction powder and 3% fluorite powder are added to a high speed dispenser, uniformly stirred, taken out to be put into a grinding apparatus for pressing and forming, and then put into a press vulcanizer and kept for 10 minutes at 160 DEG C and under a pressure of 15MPa; and then the braking pad is taken out to be sintered for 4 hours at 185 DEG C. K_{0.8}Mg_{0.75}Ti_{1.6}O₄ plane titanate is selected as the alkali-based metal compound titanate, of which the length is 50-60 microns and the width is 0.3 microns. The carbon fiber is the polyacrylonitrile-based carbon fiber.

### Contrast example 3

21% of carbon fiber, 9% of phenolic resin, 3% of nitrile rubber, 4% of aramid fiber, 8% of glass fiber, 4% of ceramic fiber, 3% of zircon, 4% of magnesium oxide, 19% of barium sulfate, 7% of calcium carbonate, 9% of mica powder, 4% of vermiculite, 2% of friction powder and 3% fluorite powder are added to a high speed dispenser, uniformly stirred, taken out to be put into a grinding apparatus for pressing and forming, and then put into a press vulcanizer and kept for 10 minutes at 160 DEG C and under a pressure of 15MPa; and then the braking pad is taken out to be sintered for 4 hours at 185 DEG C. K_{0.8}Mg_{0.75}Ti_{1.6}O₄ plane titanate is selected as the alkali-based metal compound titanate, of which the length is 50-60 microns and the width is 0.3 microns. The carbon fiber is the polyacrylonitrile-based carbon fiber.

### Contrast example 3

21% of carbon fiber, 9% of phenolic resin, 3% of nitrile rubber, 4% of aramid fiber, 8% of glass fiber, 4% of ceramic fiber, 3% of zircon, 4% of magnesium oxide, 19% of barium sulfate, 7% of calcium carbonate, 9% of mica powder, 4% of vermiculite, 2% of friction powder and 3% fluorite powder are added to a high speed dispenser, uniformly stirred, taken out to be put into a grinding apparatus for pressing and forming, and then put into a press vulcanizer and kept for 10 minutes at 160 DEG C and under a pressure of 15MPa; and then the braking pad is taken out to be sintered for 4 hours at 185 DEG C. The carbon fiber is the polyacrylonitrile-based carbon fiber.

### Contrast example 4

21% of alkaline earth-based metal compound, 9% of phenolic resin, 3% of nitrile rubber, 4% of aramid fiber, 8% of glass fiber, 4% of ceramic fiber, 3% of zircon, 4% of magnesium oxide, 19% of barium sulfate, 7% of calcium carbonate, 9% of mica powder, 4% of vermiculite, 2% of friction powder and 3% fluorite powder are added to a high speed dispenser, uniformly stirred, taken out to be put into a grinding apparatus for pressing and forming, and then put into a press vulcanizer and kept for 10 minutes at 160 DEG C and under a pressure of 15MPa; and then the braking pad is taken out to be sintered for 4 hours at 185 DEG C. Mg_{0.3}Fe_{1.5}TiO₄ is selected as the alkaline earth-based metal compound, of which the ratio of equivalent length to equivalent width is 2.5-3, and the thickness is 0.5-5 microns.

### Contrast example 5

A ceramic braking pad used in a commercially available Dongfeng Honda Civic automatic luxury car.

**Table 1 Experiment data sheet of the friction coefficient of the braking pad in embodiments**

| | Friction coefficient | | | | | |
|---|---|---|---|---|---|---|
| Temp./ DEG C | Embodiment 1 | | Embodiment 2 | | Embodiment 3 | |
| | Temp. rise | Temp. fall | Temp. rise | Temp. fall | Temp. rise | Temp. fall |
| 100 | 0.38 | 0.36 | 0.41 | 0.40 | 0.39 | 0.38 |
| 150 | 0.39 | 0.37 | 0.40 | 0.39 | 0.40 | 0.37 |
| 200 | 0.40 | 0.38 | 0.42 | 0.41 | 0.40 | 0.38 |
| 250 | 0.40 | 0.39 | 0.45 | 0.42 | 0.39 | 0.38 |
| 300 | 0.39 | 0.38 | 0.43 | 0.43 | 0.41 | 0.39 |
| 350 | 0.40 | | 0.42 | | 0.40 | |
| | | | | | | |

| | Friction coefficient | | | | | |
|---|---|---|---|---|---|---|
| Temp./ DEG C | Embodiment 4 | | Embodiment 5 | | Embodiment 6 | |
| | Temp. rise | Temp. fall | Temp. rise | Temp. fall | Temp. rise | Temp. fall |
| 100 | 0.42 | 0.40 | 0.41 | 0.40 | 0.43 | 0.40 |
| 150 | 0.43 | 0.41 | 0.42 | 0.42 | 0.41 | 0.40 |
| 200 | 0.42 | 0.40 | 0.41 | 0.41 | 0.42 | 0.40 |
| 250 | 0.41 | 0.40 | 0.42 | 0.40 | 0.42 | 0.41 |
| 300 | 0.42 | 0.41 | 0.41 | 0.39 | 0.43 | 0.42 |
| 350 | 0.40 | | 0.42 | | 0.41 | |

**Table 2 Experiment data sheet of the wear performance of the braking pad in embodiments**

| Temp./ DEG C | Wear rate/10⁻⁷cm³/Nm | | | | | |
|---|---|---|---|---|---|---|
| | Embodiment 1 | Embodiment 2 | Embodiment 3 | Embodiment 4 | Embodiment 5 | Embodiment 6 |
| 100 | 0.14 | 0.12 | 0.15 | 0.12 | 0.11 | 0.12 |
| 150 | 0.15 | 0.14 | 0.17 | 0.13 | 0.13 | 0.13 |
| 200 | 0.18 | 0.17 | 0.19 | 0.15 | 0.16 | 0.14 |
| 250 | 0.20 | 0.19 | 0.20 | 0.17 | 0.18 | 0.16 |
| 300 | 0.21 | 0.20 | 0.21 | 0.19 | 0.19 | 0.18 |
| 350 | 0.22 | 0.21 | 0.22 | 0.20 | 0.21 | 0.20 |

**Table 3 Experiment data sheet of the friction coefficient of the braking pad in contrast examples**

| | Friction coefficient | | | | | |
|---|---|---|---|---|---|---|
| Temp./ DEG C | Contrast example 1 | | Contrast example 2 | | Contrast example 3 | |
| | Temp. rise | Temp. fall | Temp. rise | Temp. fall | Temp. rise | Temp. fall |
| 100 | 0.32 | 0.30 | 0.33 | 0.30 | 0.30 | 0.30 |
| 150 | 0.33 | 0.31 | 0.34 | 0.32 | 0.29 | 0.28 |
| 200 | 0.32 | 0.30 | 0.32 | 0.33 | 0.28 | 0.30 |
| 250 | 0.32 | 0.30 | 0.33 | 0.32 | 0.28 | 0.29 |
| 300 | 0.31 | 0.29 | 0.30 | 0.31 | 0.29 | 0.30 |
| 350 | 0.30 | | 0.32 | | 0.30 | |

| | | | Friction coefficient | | | |
|---|---|---|---|---|---|---|
| Temp./ DEG C | | | Contrast example 4 | | Contrast example 5 | |
| | | | Temp. rise | Temp. fall | Temp. rise | Temp. fall |
| | 100 | | 0.35 | 0.33 | 0.40 | 0.38 |
| | 150 | | 0.36 | 0.35 | 0.40 | 0.39 |
| | 200 | | 0.34 | 0.33 | 0.38 | 0.40 |
| | 250 | | 0.35 | 0.31 | 0.39 | 0.48 |
| | 300 | | 0.32 | 0.32 | 0.40 | 0.39 |
| | 350 | | 0.34 | | 0.39 | |

**Table 4 Experiment data sheet of the wear performance of the braking pad in contrast examples**

| Temp./ DEG C | Wear rate/10⁻⁷cm³/Nm | | | | |
|---|---|---|---|---|---|
| | Contrast example 1 | Contrast example 2 | Contrast example 3 | Contrast example 4 | Contrast example 5 |
| 100 | 0.15 | 0.15 | 0.13 | 0.14 | 0.12 |
| 150 | 0.17 | 0.16 | 0.14 | 0.16 | 0.14 |
| 200 | 0.18 | 0.19 | 0.16 | 0.20 | 0.17 |
| 250 | 0.21 | 0.20 | 0.18 | 0.21 | 0.19 |
| 300 | 0.22 | 0.21 | 0.19 | 0.22 | 0.20 |
| 350 | 0.24 | 0.23 | 0.20 | 0.25 | 0.22 |

**Table 5 Comparison of the coefficients of heat conductivity in a part of embodiments and contrast examples**

| Sample | Embodiment 1 | Embodiment 2 | Embodiment 3 | Embodiment 4 | Contrast example 3 | Contrast example 4 | Contrast example 5 |
|---|---|---|---|---|---|---|---|
| Coefficient of heat conductivity /W · m⁻¹. K⁻¹ | 1.001 | 1.021 | 1.622 | 1.421 | 0.901 | 0.723 | 0.795 |

From the comparison of the contrast examples and the embodiments, the friction performance of the braking pad containing the alkaline earth-based metal compound and the carbon fiber is obviously higher than that of the braking pad containing the alkaline metal-based metal compound, the friction wear performance is greatly improved, the friction coefficient is increased by nearly 20% at high temperature, the wear rate is also decreased by nearly 20%, and the high temperature-fading resistance is more obvious. From Contrast Examples 3 and 4, the friction coefficient of the braking pad which separately uses the carbon fiber is low, but its wear rate is high; the friction coefficient of the braking pad which separately uses the alkaline earth-based metal compound is high, but its wear rate is higher that that of the braking pad which separately uses the carbon fiber. By the collaborative use of the two materials, advantages of the two materials are effectively combined, and the friction wear performance of the friction material is enhanced collaboratively.

From the experiment result tables, when containing different types of alkaline earth-based metal compounds and carbon fibers (Embodiments 4, 5 and 6), the braking pads have similar friction and wear performance, without obvious difference in the numerical value. Any collaboration of different types of alkaline earth-based metal compounds and carbon fibers may effectively improve the friction performance of the friction materials.

The coefficient (Table 5) of heat conductivity of the material in the embodiments is obviously higher than that of the material in the contrast examples, twice of that of the material in the contrast examples. During friction braking, heat produced by friction may be dissipated more easily, the temperature of the friction surface is effectively reduced, the high temperature resistance is obviously improved, and the friction wear performance is better than that of the material in the contrast examples. Compared with a braking pad purchased from market (Contrast Example 5), the braking pad prepared according to the invention has better friction wear performance. Under the condition of copper free, the ceramic braking pad provided in the invention also can accomplish the performance of a copper-contained ceramic braking pad.

When the samples are used for overall vehicle operation, compared with the original braking pad of the vehicle, the braking distance is shortened, and the safety of the vehicle is greatly improved. When the braking pad disclosed in the invention is used for overall vehicle operation, the braking pad has good braking effect, good stability and no noise, meeting all national standards.

## Claims

1. A copper-free ceramic friction material, wherein the friction material at least contains the following materials in mass content: 2%-30% of alkaline earth-based metal compound and 2%-30% of carbon fiber, wherein the alkaline earth-based metal compound is MxFeyTiOz, the M is alkaline earth element Be, Mg, Ca, Sr or Ba, x is 0.2-2, y is 1-2, and z is 4-16.

2. The copper-free ceramic friction material according to claim 1, wherein the copper-free ceramic friction material also contains a binder, a friction performance modifier and a filler, wherein the mass content of the binder is 5%-20%, and the total mass content of the friction performance modifier and the filler is 20%-80%.

3. The copper-free ceramic friction material according to claim 1, wherein, in the friction material, the mass content of the alkaline earth-based metal compound is preferably 10%-20%, and the mass content of the carbon fiber is 2%-20%.

4. The copper-free ceramic friction material according to claim 1, wherein the alkaline earth-based metal compound is MxFeyTiOz, M is alkaline earth element Mg, Ca or Ba, x is 0.2-1, y is 1-2, and z is 4-8.

5. The copper-free ceramic friction material according to claim 1 or 4, wherein the alkaline earth-based metal compound is a particle, the ratio of equivalent length to equivalent width of which is 1-3, the thickness thereof is 0.5-20 microns and the width thereof is 0.5-20 microns.

6. The copper-free ceramic friction material according to claim 1, wherein the carbon fiber is selected from one or more of polyacrylonitrile-based carbon fiber, asphalt-based carbon fiber, viscose rayon-based carbon fiber or phenolic fiber-based carbon fiber.

7. The copper-free ceramic friction material according to claim 2, wherein the binder is selected from one or more of phenolic resin, modified phenolic resin or nitrile rubber.

8. The copper-free ceramic friction material according to claim 2, wherein the friction performance modifier and the filler are selected from one or more of glass fiber, ceramic fiber, compound mineral fiber, silicate fiber, lignin fiber, cellulosic fiber, aramid fiber, iron black, zircon, iron red, zirconia, magnesium oxide, mica powder, fluorite powder, zeolite, vermiculite, anatase, attapulgite clay, kaoline, lithopone, barium sulfate, friction powder or heavy calcium carbonate.

9. A method for preparing the copper-free ceramic friction material as described in claim 1 or 2, comprising the following steps:
(1) premixing: measuring alkaline earth-based metal compound and carbon fiber, and mixing uniformly;
(2) mixing: measuring binder, friction performance modifier and filler, mixing with the mixture in step (1) and stirring, and then adding to a hot-pressing mold;
(3) hot-pressing: rising the temperature to 155 DEG C to 200 DEG C, and keeping the temperature and pressure for 3-10 minutes under a pressure of 10-30MPa for hot-pressing;
(4) post-processing: keeping the hot-pressed material at 185 DEG C to 200 DEG C for 3-8 hours, and cooling to obtain the copper-free ceramic friction material.

## Patentansprüche

1. Kupferfreies keramisches Reibmaterial, wobei das Reibmaterial mindestens die folgenden Materialien als Massengehalt enthält: 2 % bis 30 % einer Metallverbindung auf Erdalkalibasis und 2 % bis 30 % Kohlefasern, wobei die Metallverbindung auf Erdalkalibasis MxFeyTiOz ist, M das Erdalkalielement Be, Mg, Ca, Sr oder Ba ist, x 0,2 bis 2 ist, y 1 bis 2 ist und z 4 bis 16 ist.

2. Kupferfreies keramisches Reibmaterial nach Anspruch 1, wobei das kupferfreie keramische Reibmaterial ferner ein Bindemittel, ein Reibleistungsmodifiziermittel und einen Füllstoff enthält, wobei der Massengehalt des Bindemittels 5 % bis 20 % beträgt und der Gesamtmassengehalt des Reibleistungsmodifiziermittels und des Füllstoffs 20 % bis 80 % beträgt.

3. Kupferfreies keramisches Reibmaterial nach Anspruch 1, wobei in dem Reibmaterial der Massengehalt der Metallverbindung auf Erdalkalibasis vorzugsweise 10 % bis 20 % beträgt und der Massengehalt der Kohlefasern 2 % bis 20 % beträgt.

4. Kupferfreies keramisches Reibmaterial nach Anspruch 1, bei dem die Metallverbindung auf Erdalkalibasis MxFeyTiOz ist, M das Erdalkalielement Mg, Ca oder Ba ist, x 0,2 bis 1 ist, y 1 bis 2 ist und z 4 bis 8 ist.

5. Kupferfreies keramisches Reibmaterial nach Anspruch 1 oder 4, bei dem die Metallverbindung auf Erdalkalibasis ein Teilchen ist, dessen Verhältnis der äquivalenten Länge zur äquivalenten Breite 1 bis 3 beträgt, dessen Dicke 0,5 bis 20 Mikrometer beträgt und dessen Breite 0,5 bis 20 Mikrometer beträgt.

6. Kupferfreies keramisches Reibmaterial nach Anspruch 1, bei dem die Kohlefasern aus einem oder mehreren von Kohlefasern auf Polyacrylnitrilbasis, Kohlefasern auf Asphaltbasis, Kohlefasern auf Viskose-Reyon-Basis oder Kohlefasern auf phenolischer Basis ausgewählt ist.

7. Kupferfreies keramisches Reibmaterial nach Anspruch 2, bei dem das Bindemittel aus einem oder mehreren eines Phenolharzes, eines modifizierten Phenolharzes oder eines Nitrilkautschuks ausgewählt ist.

8. Kupferfreies keramisches Reibmaterial nach Anspruch 2, bei dem das Reibleistungsmodifiziermittel und der Füllstoff aus einem oder mehreren von Glasfasern, Keramikfasern, Verbundmineralfasern, Silikatfasern, Ligninfasern, Cellulosefasern, Aramidfasern, Eisenschwarz, Zirkon, Eisenrot, Zirkoniumoxid, Magnesiumoxid, Glimmerpulver, Fluoritpulver, Zeolith, Vermiculit, Anatas, Attapulgitton, Kaolin, Lithopone, Bariumsulfat, Reibpulver oder schwerem Calciumcarbonat ausgewählt sind.

9. Verfahren zur Herstellung des kupferfreien keramischen Reibmaterials nach Anspruch 1 oder 2, umfassend die folgenden Schritte:
(1) Vormischen: Dosieren der Metallverbindung auf Erdalkalibasis und Kohlefasern und einheitlich Mischen,
(2) Mischen: Dosieren des Bindemittels, des Reibleistungsmodifiziermittels und des Füllstoffs, Mischen mit dem Gemisch von Schritt (1) und Rühren und dann Einbringen in ein Warmpressformwerkzeug,
(3) Warmpressen: Erhöhen der Temperatur auf 155 °C bis 200 °C und Halten der Temperatur und des Drucks für 3 bis 10 Minuten bei einem Druck von 10 bis 30 MPa zum Warmpressen,
(4) Nachverarbeitung: Halten des warmgepressten Materials bei 185 °C bis 200 °C für 3 bis 8 Stunden und Abkühlen zum Erhalten des kupferfreien keramischen Reibmaterials.

## Revendications

1. Matériau de friction céramique dépourvu de cuivre, dans lequel le matériau de friction contient au moins les matériaux suivants, à teneur en poids : 2 %-30 % de composé métallique alcalinoterreux et 2 %-30 % de fibre de carbone, dans lequel le composé métallique alcalinoterreux est du MxFeyTiOz, le M est un élément alcalinoterreux Be, Mg, Ca, Sr ou Ba, x est 0,2-2, y est 1-2 et z est 4-16.

2. Matériau de friction céramique dépourvu de cuivre selon la revendication 1, dans lequel le matériau de friction contient également un liant, un modificateur de performance de friction et un agent de remplissage, dans lequel la teneur en poids du liant est de 5 %-20 %, et la teneur en poids totale du modificateur de performance de friction et de l'agent de remplissage est de 20 %-80 %.

3. Matériau de friction céramique dépourvu de cuivre selon la revendication 1, dans lequel, dans le matériau de friction, la teneur en poids du composé métallique alcalinoterreux est de préférence de 10 %-20 %, et la teneur en poids de la fibre de carbone est de 2 %-20 %.

4. Matériau de friction céramique dépourvu de cuivre selon la revendication 1, dans lequel le composé métallique alcalinoterreux est du MxFeyTiOz, M est un élément alcalinoterreux Mg, Ca ou Ba, x est 0,2-1, y est 1-2 et z est 4-8.

5. Matériau de friction céramique dépourvu de cuivre selon la revendication 1 ou 4, dans lequel le composé métallique alcalinoterreux est une particule, dont le rapport de longueur équivalente sur largeur équivalente est de 1-3, dont l'épaisseur est de 0,5-20 micromètres et dont la largeur est de 0,5-20 microns.

6. Matériau de friction céramique dépourvu de cuivre selon la revendication 1, dans lequel la fibre de carbone est sélectionnée parmi une ou plusieurs de fibre de carbone à base de polyacrylonitrile, de fibre de carbone à base d'asphalte, de fibre de carbone à base de rayonne de viscose ou de fibre de carbone à base de fibre phénolique.

7. Matériau de friction céramique dépourvu de cuivre selon la revendication 2, dans lequel le liant est sélectionné parmi un ou plusieurs d'une résine phénolique, d'une résine phénolique modifiée ou du caoutchouc de nitrile.

8. Matériau de friction céramique dépourvu de cuivre selon la revendication 2, dans lequel le modificateur de performance de friction et l'agent de remplissage sont sélectionnés parmi un ou plusieurs d'une fibre de verre, d'une fibre de céramique, d'une fibre minérale composée, d'une fibre de silicate, d'une fibre de lignine, d'une fibre cellulosique, d'une fibre d'aramide, de noir de fer, de zircon, de rouge de fer, de zircone, d'oxyde de magnésium, de poudre de mica, de poudre de fluorite, de zéolite, de vermiculite, d'anatase, d'argile attapulgite, de kaolin, de lithopone, de sulfate de baryum, de poudre de friction ou de carbonate de calcium lourd.

9. Procédé de préparation du matériau de friction céramique dépourvu de cuivre tel que décrit dans la revendication 1 ou 2, comprenant les étapes suivantes :
(1) prémélange : mesure du composé métallique alcalinoterreux et de la fibre de carbone, et mélange uniforme ;
(2) mélange : mesure du liant, du modificateur de performance de friction et de l'agent de remplissage, mélange avec le mélange de l'étape (1) et brassage, puis ajout à un moule de pressage à chaud ;
(3) pressage à chaud : élévation de la température à 155 DEG C à 200 DEG C, et maintien de la température et de la pression pendant 3-10 minutes sous une pression de 10-30 MPa pour pressage à chaud ;
(4) post-traitement : maintien du matériau pressé à chaud à 185 DEG C à 200 DEG C pendant 3-8 heures, et refroidissement pour obtenir le matériau de friction céramique dépourvu de cuivre.
